# EUROPEAN PATENT APPLICATION

(11) **EP 4 765 772 A1**
(43) Date of publication of application: **24.06.2026**
(21) Application number: 24855284.6
(22) Date of filing: 29.03.2024
(51) Int. Cl.: H04L 67/1097

(54) **DATA TRANSMISSION METHOD AND COMPUTING NODE**

(30) Priority: 21.08.2023 CN 202311057696
(71) Applicant: xFusion Digital Technologies Co., Ltd., Henan 450000 (CN)
(72) Inventor: YU, Shubao, Zhengzhou, Henan 450000 (CN); HUANG, Tao, Zhengzhou, Henan 450000 (CN); LIANG, Yonggui, Zhengzhou, Henan 450000 (CN)
(74) Representative: Isarpatent
(86) International application number: PCT/CN2024/084719
(87) International publication number: WO 2025/039553

(57) **Abstract**

Embodiments of the present application provide a data transfer method and a compute node. The method is applied to a first compute node in a computer cluster. The computer cluster includes a plurality of compute nodes, a storage node, and a compute express link (CXL) device. The plurality of compute nodes are connected to the storage node via the CXL device, and the plurality of compute nodes are further interconnected over an Internet link. The method includes: storing, by the first compute node, target data in a target storage location located in a target storage node via the CXL device, in which the first compute node is any compute node among the plurality of compute nodes, and the storage node includes the target storage node; and sending, by the first compute node, a notification message to a second compute node over the Internet link, in which the notification message includes node information of the target storage node and the target storage location, and the second compute node is any compute node among the plurality of compute nodes other than the first compute node. Based on the foregoing method, data transfer efficiency in the computer cluster can be improved.

## Description

This application claims priority to Chinese Patent Application No. 202311057696.7, filed with the China National Intellectual Property Administration on August 21, 2023, and entitled "DATA TRANSFER METHOD AND COMPUTE NODE", which is incorporated herein by reference in its entirety.

### TECHNICAL FIELD

The present application relates to the field of server technologies, and in particular to a data transfer method and a compute node.

### BACKGROUND

A computer cluster is a computer system consisting of a group of compute nodes. Data can be transferred between the compute nodes in the computer cluster. For example, the computer cluster may be an artificial intelligence (Artificial Intelligence, AI) training cluster.

Currently, data can be transferred between different compute nodes in the computer cluster over the Internet. However, when the amount of data transferred is large, insufficient Internet bandwidth may affect data transfer efficiency, leading to low data transfer efficiency and high transfer latency between the compute nodes, thereby reducing data transfer efficiency in the computer cluster.

### SUMMARY

Embodiments of the present application provide a data transfer method and a compute node. The method can improve data transfer efficiency in a computer cluster.

According to a first aspect, embodiments of the present application provide a data transfer method. The data transfer method is applied to a first compute node in a computer cluster, in which the computer cluster includes a plurality of compute nodes, a storage node, and a compute express link (CXL) device, the plurality of compute nodes are connected to the storage node via the CXL device, and the plurality of compute nodes are further interconnected over an Internet link. The method includes:
storing, by the first compute node, target data in a target storage location located in a target storage node via the CXL device, in which the first compute node is any compute node among the plurality of compute nodes, and the storage node includes the target storage node; and
sending, by the first compute node, a notification message to a second compute node over the Internet link, in which the notification message includes node information of the target storage node and the target storage location, and the notification message is configured to notify the second compute node that the target data is stored in the target storage location located in the target storage node, in which the second compute node is any compute node among the plurality of compute nodes other than the first compute node.

In the foregoing solution, the first compute node may store the target data located in the target storage location in the target storage node via the CXL device, thereby achieving rapid transfer of the target data. And the first compute node may send the notification message to the second compute node over the Internet link, to notify the second compute node of the storage location of the target data. Therefore, the second computing device may quickly obtain the target data from the target storage location as required. Based on the foregoing method, decoupling of the target data and the notification message is achieved, and data transfer efficiency in the computer cluster is improved.

In a possible implementation, the CXL device is a multi-host CXL device, and the plurality of compute nodes and the storage node are respectively connected to the multi-host CXL device;
storing, by the first compute node, the target data in the target storage location located in the target storage node via the CXL device, includes:
sending, by the first compute node, a first storage request to the multi-host CXL device, in which the first storage request includes the node information of the target storage node, the target storage location, and the target data;
in which the first storage request is configured to request the multi-host CXL device to store the target data in the target storage location located in the target storage node.

In the foregoing solution, the CXL device may be the multi-host CXL device, and the first compute node may store the target data via the multi-host CXL device, thereby improving data storage efficiency.

In a possible implementation, the CXL device is a CXL switch device, and the plurality of compute nodes are connected to the storage node via the CXL switch device; and
storing, by the first compute node, the target data in the target storage location located in the target storage node via the CXL device, includes:
sending, by the first compute node, a second storage request to the CXL switch device, in which the second storage request includes the node information of the target storage node, the target storage location, and the target data;
in which the second storage request is configured to instruct the CXL switch device to store the target data in the target storage location located in the target storage node.

In the foregoing solution, the CXL device may be the CXL switch device, and the first compute node may store the target data via the CXL switch device, thereby improving data storage efficiency.

In a possible implementation, the method further includes: determining, by the first compute node, the target storage node and the target storage location located in the target storage node.

In the foregoing solution, the first compute node may determine the target storage location located in the storage node, thereby achieving a purpose of determining the target storage location.

In a possible implementation, determining, by the first compute node, the target storage node and the target storage location located in the target storage node, includes:
obtaining, by the first compute node, storage configuration information corresponding to the first compute node, in which the storage configuration information includes node information of a storage node to be selected corresponding to the first compute node, and a storage area to be selected in the storage node to be selected; and
determining, by the first compute node, the target storage node from the storage node to be selected, and determining, the target storage location from the storage area to be selected in the target storage node, based on a data size of the target data and the storage configuration information, in which a remaining storage space in the storage area to be selected in the target storage node is greater than the data size of the target data.

In the foregoing solution, the first compute node may determine the target storage node from the storage node to be selected, and determine the target storage location from the storage area to be selected in the target storage node, thereby avoiding that the first compute node determines the target storage node from all storage nodes, and the target storage location. In this way, the first compute node determines the target storage node and the target storage location at a relatively fast speed, thereby further improving a storage speed of the first compute node.

According to a second aspect, embodiments of the present application provide a data transfer method. The method is applied to a second compute node in a computer cluster, in which the computer cluster includes a plurality of compute nodes, a storage node, and a compute express link (CXL) device, the plurality of compute nodes are connected to the storage node via the CXL device, and the plurality of compute nodes are further interconnected over an Internet link. The method includes:
obtaining, by the second compute node, a notification message from a first compute node over the Internet link, in which the notification message includes node information of a target storage node and a target storage location, the plurality of compute nodes include the second compute node and the first compute node, and the storage node includes the target storage node; and
reading, by the second compute node, based on the notification message, target data from the target storage location located in the target storage node via the CXL device.

In the foregoing solution, the second compute node may receive the notification message sent by the first compute node over the Internet link, and may quickly read, based on the notification message, the target data from the target storage location located in the target storage node via the CXL device. Based on the foregoing method, decoupling of the target data and the notification message is achieved, and data transfer efficiency in the computer cluster is improved.

In a possible implementation, the method further includes:
sending, by the second compute node, a response message to the first compute node over the Internet link, in which the response message includes a reading result of the target data, and the reading result is reading success or reading failure.

In the foregoing solution, the second compute node may send the reading result of the target data to the first compute node, so that the first compute node obtains the reading result of the target data.

In a possible implementation,
the CXL device is a multi-host CXL device, and the plurality of compute nodes and the storage node are respectively connected to the multi-host CXL device; or
the CXL device is a CXL switch device, and the plurality of compute nodes are connected to the storage node via the CXL switch device.

In the foregoing solution, data transfer may be performed via the multi-host CXL device/CXL switch device, thereby improving data transfer efficiency.

According to a third aspect, embodiments of the present application provide a computer cluster. The computer cluster includes a plurality of compute nodes, a storage node, and a CXL device, and the compute node is configured to perform the method according to any one of the first aspect or the second aspect.

In the foregoing solution, the target data may be transferred between the compute nodes via the CXL device, and the notification message may be sent over the Internet link, which achieves decoupling of the target data and the notification message, improves read and write efficiency of the target data, and enhances data transfer efficiency in the computer cluster.

In a possible implementation, the CXL device is a multi-host CXL device, and the plurality of compute nodes and the storage node are respectively connected to the multi-host CXL device; or,

the CXL device is a CXL switch device, and the plurality of compute nodes are connected to the storage node via the CXL switch device.

In the foregoing solution, data transfer may be performed between the compute nodes in the computer cluster via the multi-host CXL device/CXL switch device, thereby improving data transfer efficiency.

According to a fourth aspect, embodiments of the present application provide a data transfer apparatus. The data transfer apparatus is applied to a computer cluster, in which the computer cluster includes a plurality of compute nodes, a storage node, and a compute express link (CXL) device, the plurality of compute nodes are connected to the storage node via the CXL device, and the plurality of compute nodes are further interconnected over an Internet link. Any compute node among the plurality of compute nodes may include the data transfer apparatus, and the data transfer apparatus may include a processing module and a sending module.

The processing module is configured to store target data in a target storage location located in a target storage node via the CXL device.

The sending module is configured to, send a notification message to a second compute node over the Internet link, in which the notification message includes node information of the target storage node and the target storage location, the notification message is configured to notify the second compute node that the target data is stored in the target storage location located in the target storage node, in which the second compute node is any compute node among the plurality of compute nodes other than a compute node to which the data transfer apparatus belongs.

In the foregoing solution, the data transfer apparatus may store the target data in the target storage location in the target storage node via the CXL device, and may send the notification message to the second compute node over the Internet link to notify the second compute node of the storage location of the target data. Based on the foregoing solution, decoupling of the target data and the notification message is achieved, and data transfer efficiency in the computer cluster is improved.

In a possible implementation, the CXL device is a multi-host CXL device, and the plurality of compute nodes and the storage node are respectively connected to the multi-host CXL device. The processing module is specifically configured to,
send a first storage request to the multi-host CXL device, in which the first storage request includes the node information of the target storage node, the target storage location, and the target data;
the first storage request is configured to request the multi-host CXL device to store the target data in the target storage location located in the target storage node.

In the foregoing solution, the CXL device may be the multi-host CXL device, and the storage module may store the target data via the multi-host CXL device, thereby improving data storage efficiency.

In a possible implementation, the CXL device is a CXL switch device, and the plurality of compute nodes are connected to the storage node via the CXL switch device. The processing module is specifically configured to,
send a second storage request to the CXL switch device, in which the second storage request includes the node information of the target storage node, the target storage location, and the target data; and
the second storage request is configured to instruct the CXL switch device to store the target data in the target storage location in the target storage node.

In the foregoing solution, the CXL device may be the CXL switch device, and the storage module may store the target data via the CXL switch device, thereby improving data storage efficiency.

In a possible implementation, the processing module is further configured to,
determine the target storage node and the target storage location located in the target storage node.

In the foregoing solution, the processing module may determine the target storage location located in the storage node, thereby determining the target storage location.

In a possible implementation, the processing module is specifically configured to,
obtain storage configuration information corresponding to a first compute node, in which the storage configuration information includes node information of a storage node to be selected corresponding to the first compute node, and a storage area to be selected in the storage node to be selected; and
determine the target storage node from the storage node to be selected, and determine the target storage location from the storage area to be selected in the target storage node, based on a data size of the target data and the storage configuration information, in which a remaining storage space in the storage area to be selected in the target storage node is greater than or equal to the data size of the target data.

In the foregoing solution, the processing module may determine the target storage node from at least one storage node to be selected, and determine the target storage location from the storage area to be selected in the target storage node, thereby avoiding determining the target storage node from all storage nodes and determining the target storage location. In this way, the processing module determines the target storage node and the target storage location at a relatively fast speed, thereby further improving a storage speed of data.

According to a fifth aspect, embodiments of the present application provide a data transfer apparatus. The data transfer apparatus is applied to a computer cluster, in which the computer cluster includes a plurality of compute nodes, a storage node, and a compute express link (CXL) device, the plurality of compute nodes are connected to the storage node via the CXL device, and the plurality of compute nodes are further interconnected over an Internet link. Any compute node among the plurality of compute nodes may include the data transfer apparatus, and the data transfer apparatus may include an obtaining module, a processing module, and a sending module.

The obtaining module is configured to, obtain a notification message from a first compute node over the Internet link, in which the notification message includes node information of a target storage node and a target storage location, the plurality of compute nodes include the first compute node, and the storage node includes the target storage node.

The processing module is configured to, read, based on the notification message, target data from the target storage location located in the target storage node via the CXL device.

The sending module is configured to, send a response message to the first compute node over the Internet link, in which the response message includes a reading result of the target data, and the reading result is reading success or reading failure.

In the foregoing solution, the data transfer apparatus may receive the notification message sent by the first compute node, and may read, based on the notification message, the target data from the target storage location located in the target storage node. Based on the foregoing solution, decoupling of the target data and the notification message is achieved, and data transfer efficiency in the computer cluster is improved.

In a possible implementation,
the CXL device is a multi-host CXL device, and the plurality of compute nodes and the storage node are respectively connected to the multi-host CXL device; or
the CXL device is a CXL switch device, and the plurality of compute nodes are connected to the storage node via the CXL switch device.

In the foregoing solution, data transfer may be performed via the multi-host CXL device/CXL switch device, thereby improving data transfer efficiency.

According to a sixth aspect, embodiments of the present application provide a compute node, including: a processor, and a memory communicatively connected to the processor;
in which the memory stores a computer executable program; and
the processor executes the computer executable program stored in the memory, to implement the method as described in any one of the first aspect or the second aspect.

In the foregoing solution, target data may be transferred between compute nodes via a CXL device, and a notification message may be sent over an Internet link, which achieves decoupling of the target data and the notification message, improves read and write efficiency of the target data, and enhances data transfer efficiency in a computer cluster.

In a possible implementation, the compute node further includes a network interface card, and a processor communicatively connected to the network interface card; and
the processor is communicatively connected to an Internet link via the network interface card.

In the foregoing solution, the compute node may be connected to the Internet link via the network interface card, which achieves a purpose of connecting the compute node to the Internet link.

According to a seventh aspect, embodiments of the present application provide a computer-readable storage medium, in which the computer-readable storage medium stores a computer executable program, and the computer executable program, when executed by a processor, is configured to implement the method as described any one of the first aspect or the second aspect.

In the foregoing solution, target data may be transferred between compute nodes via a CXL device, and a notification message may be sent over an Internet link, which achieves decoupling of the target data and the notification message, improves read and write efficiency of the target data, and enhances data transfer efficiency in a computer cluster.

According to an eighth aspect, embodiments of the present application provide a computer program product, including a computer program, in which the computer program, when executed by a computer, implements the method as described in any one of the first aspect or the second aspect.

In the foregoing solution, target data may be transferred between compute nodes via a CXL device, and a notification message may be sent over an Internet link, which achieves decoupling of the target data and the notification message, improves read and write efficiency of the target data, and enhances data transfer efficiency in a computer cluster.

### BRIEF DESCRIPTION OF DRAWINGS

In order to more clearly illustrate technical solutions in embodiments of the present application or in the related art, accompany drawings to be used in the embodiments of the present application or in the related art will be described briefly. Apparently, the drawings in the following description are only some embodiments of the present application, and other drawings may be obtained based on these drawings without creative effort for those skilled in the art.
FIG. 1 is a schematic diagram illustrating a cluster architecture according to an embodiment of the present application;
FIG. 2 is a schematic diagram illustrating connections among compute nodes in a cluster according to an embodiment of the present application;
FIG. 3 is a schematic diagram illustrating a computer cluster architecture according to an embodiment of the present application;
FIG. 4 is a schematic diagram illustrating a data read/write speed of a CXL device according to an embodiment of the present application;
FIG. 5 is a flowchart illustrating a data transfer method according to an embodiment of the present application;
FIG. 6 is a structural diagram illustrating a computer cluster according to an embodiment of the present application;
FIG. 7 is a flowchart illustrating another data transfer method according to an embodiment of the present application;
FIG. 8 is a schematic diagram illustrating a data transfer process according to an embodiment of the present application;
FIG. 9 is a structural diagram illustrating another computer cluster according to an embodiment of the present application;
FIG. 10 is a flowchart illustrating another data transfer method according to an embodiment of the present application;
FIG. 11 is a schematic diagram illustrating another data transfer process according to an embodiment of the present application;
FIG. 12 is a structural diagram illustrating a data transfer apparatus according to an embodiment of the present application;
FIG. 13 is a structural diagram illustrating another data transfer apparatus according to an embodiment of the present application; and
FIG. 14 is a structural diagram illustrating a computing device according to an embodiment of the present application.

### DESCRIPTION OF EMBODIMENTS

Reference will be made in detail to example embodiments, examples of which are illustrated in accompanying drawings. The following description refers to the accompanying drawings in which same numbers in different drawings represent same or similar elements unless otherwise stated. The implementations set forth in the following example embodiments do not represent all implementations consistent with the embodiments of the present application. Instead, they are merely examples of apparatuses and methods consistent with some aspects of the embodiments of the present application as recited in the appended claims.

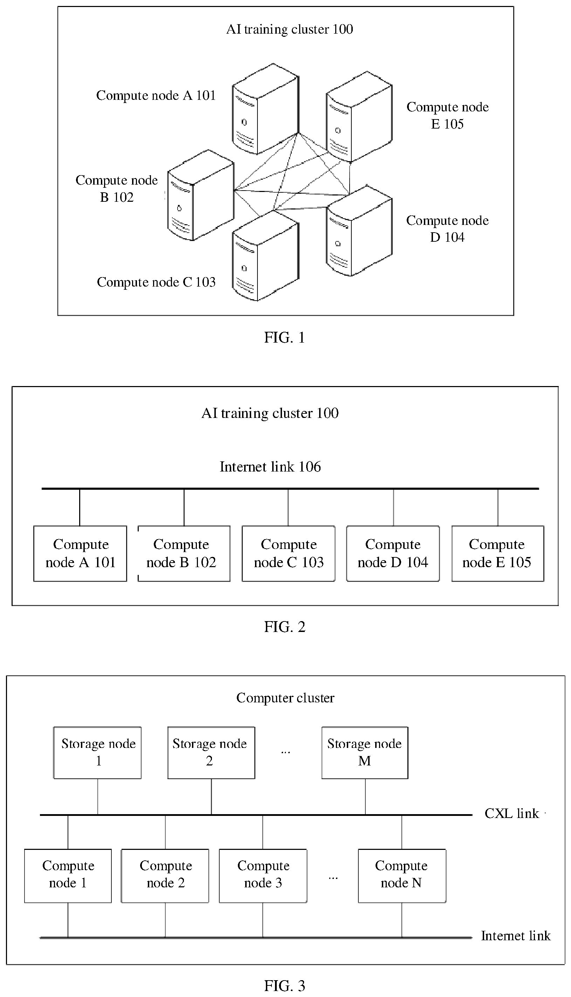

For ease of understanding, an application scenario involved in the embodiments of the present application is described by taking an AI training cluster as an example with reference to FIG. 1.

FIG. 1 is a schematic diagram illustrating a system architecture according to an embodiment of the present application. As shown in FIG. 1, the cluster may be, for example, an AI training cluster, or another function cluster. In the following description, the cluster is taken as an AI training cluster as an example. An AI training cluster 100 may include a plurality of compute nodes. The plurality of compute nodes may include, for example, a compute node A101, a compute node B102, a compute node C103, a compute node D104, and a compute node E105.

The compute node A101, the compute node B102, the compute node C103, the compute node D104, and the compute node E105 may be interconnected in a wired or wireless manner.

Any compute node in the AI training cluster 100 may exchange information with other compute nodes. For example, the compute node A101 may exchange information with the compute node B102, the compute node C103, the compute node D104, or the compute node E105. The information may be data or a message.

The data may be job data that is required to be transferred between the compute nodes. For example, in the case of an AI training cluster, the data may be training data transferred between the compute nodes, etc.

The message may be a packet corresponding to the data, and the message may describe a storage address of the data, etc. For example, when the data is training data transferred between the compute nodes, and the message may include a storage address of the data, etc. The message may be, for example, a notification message or a response message.

The compute node may be a computing device capable of performing a data read/write operation. For example, the compute node may be a server, a laptop computer, a desktop computer, a tablet computer, a single-chip microcontroller, a multimedia player, an artificial intelligence device, a wearable device, an Internet of Things device, or a virtual reality/augmented reality/mixed reality device.

Currently, the data and the message between the compute nodes in the cluster are transferred over the Internet. As shown in FIG. 2, FIG. 2 is a schematic diagram illustrating connections among compute nodes in a cluster according to an embodiment of the present application. As shown in FIG. 2, the AI training cluster 100 may include the compute node A101, the compute node B102, the compute node C103, the compute node D104, the compute node E105, and an Internet link 106.

It should be noted that the Internet link 106 may be in a wired or wireless form. In FIG. 2, the Internet link 106 is illustrated only in a wired form, and does not constitute a limitation on the embodiment of the present application.

The compute node A101, the compute node B102, the compute node C103, the compute node D104, and the compute node E105 may be connected to the Internet link 106. That is, the compute node A101, the compute node B102, the compute node C103, the compute node D104, and the compute node E105 may be interconnected over the Internet link 106. Data may be transferred between the compute nodes over the Internet link 106, and messages may be transferred over the Internet link 106.

For example, the compute node A101 may transfer data to the compute node B102, the compute node C103, the compute node D104, or the compute node E105 over the Internet link 106. The compute node A101 may also transfer a message to the compute node B102, the compute node C103, the compute node D104, or the compute node E105 over the Internet link 106.

However, during the information exchange process, if the amount of data transferred between the compute nodes is large, insufficient Internet bandwidth may affect data transfer efficiency, leading to low data transfer efficiency and high transfer latency between the compute nodes, thereby reducing data transfer efficiency in a computer cluster.

In view of this, the embodiment of the present application provides a computer cluster and a data transfer method applied to the computer cluster, to resolve the issue of the low data transfer efficiency and high transfer latency between the compute nodes.

As shown in FIG. 3, FIG. 3 is a schematic diagram illustrating a computer cluster architecture according to an embodiment of the present application. As shown in FIG. 3, the computer cluster may include a plurality of compute nodes, a storage node, a CXL link, and an Internet link. The plurality of compute nodes may be a compute node 1, a compute node 2, a compute node 3, ..., and a compute node N. There may be one or a plurality of storage nodes. "a plurality of" refers to two or more. In FIG. 3, an example in which there are a plurality of storage nodes is used for description. The plurality of storage nodes may be a storage node 1, a storage node 2, ..., and a storage node M. M and N may be the same, or M and N may be different, which are not limited in the embodiment of the present application.

The plurality of compute nodes and the plurality of storage nodes may be connected to the CXL link, that is, the plurality of compute nodes and the plurality of storage nodes may be connected via the CXL link. The plurality of compute nodes may be further connected over the Internet link.

The computer cluster may be a computer cluster that requires high-volume data transfer. For example, the computer cluster may be an AI training cluster, a distributed database, or another type of cluster.

The compute node may be a computing device capable of performing a data read/write operation. For example, the compute node includes, but is not limited to a server, a laptop computer, a desktop computer, a tablet computer, a single-chip microcontroller, a multimedia player, an artificial intelligence device, a wearable device, an Internet of Things device, a virtual reality/augmented reality/mixed reality device, a mobile phone, and other computing devices.

The storage node may be a device having a storage function. For example, the storage node may include dynamic random access memory (Dynamic Random Access Memory, DRAM), synchronous dynamic random access memory (Synchronous Dynamic Random Access Memory, SDRAM), solid state disks (Solid State Disk, SSD), or persistent memory (Persistent Memory, PMEM). The storage node may be further include network interface card, graphics processing unit (Graphics Processing Unit, GPU), field programmable gate array (Field Programmable Gate Array, FPGA) card, or another device having a storage function and supporting a CXL technology.

The CXL link may include at least one CXL device. The CXL device may be a multi-host (Multihost) CXL device or a CXL switch (Switch) device.

In some implementations, when the CXL device is the multi-host CXL device, the storage node may include DRAM, SDRAM, SSD, PMEM, or dual inline memory modules (Dual Inline Memory Modules, DIMM).

When the CXL device is the CXL switch device, the storage node may include a controller and a memory. The controller may include a CXL memory expander chip, a CXL memory expander controller, or a CXL memory expander pooling chip. The memory may include DRAM, SDRAM, SSD, PMEM, or DIMM. It may be understood that a specific structure of the storage node is not limited in the embodiment of the present application, as long as the compute node can use a storage space in the storage node via the CXL device.

The multi-host CXL device may include a plurality of compute node interfaces and one or more storage node interfaces. For any compute node interface, the multi-host CXL device may be connected to one compute node via the compute node interface. For any storage node interface, the multi-host CXL device may be connected to one storage node via the storage node interface.

For example, the multi-host CXL device may include, for example, a multi-host (multi-host) CXL memory expander (CXL memory expander) chip, a multi-host CXL memory expander controller (CXL memory expander controller), or a CXL memory expander pooling (CXL memory expander pooling) chip.

The multi-host CXL device may include one or more compute node interfaces, and/orone or more storage node interfaces. For any compute node interface, the multi-host CXL device may be connected to one compute node via the compute node interface. For any storage node interface, the multi-host CXL device may be connected to one storage node via the storage node interface.

Optionally, the CXL switch device may further include one or more device interfaces. For any device interface, the CXL switch device may be connected to another CXL switch device via the device interface.

The CXL switch device may be, for example, a CXL switch, and the CXL switch may include a CXL switch (CXL Switch) chip.

The Internet link may include a line and a connection device, which are connected to a network interface card of a compute node and are used to connect the compute node to the Internet.

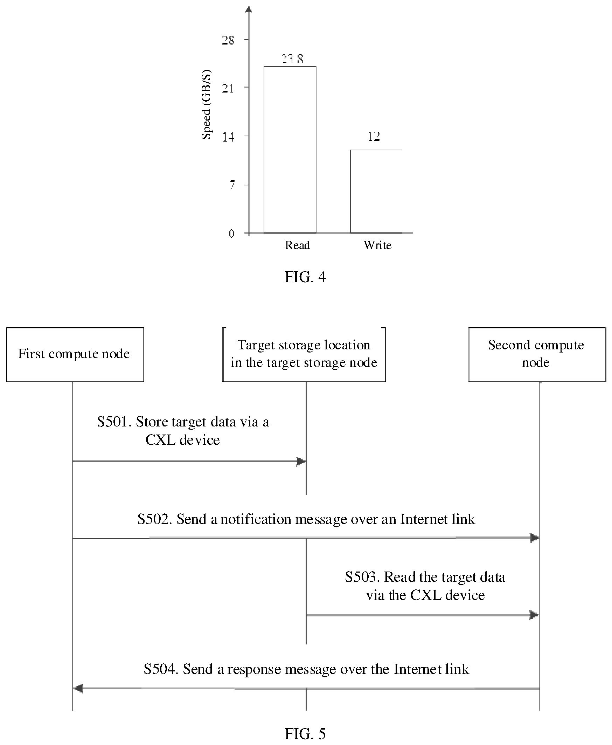

In the computer cluster, the CXL device supports a relatively fast data read/write speed. As shown in FIG. 4, FIG. 4 is a schematic diagram illustrating a data read/write speed of the CXL device according to an embodiment of the present application. As shown in FIG. 4, the horizontal axis in FIG. 4 represents a data operation mode, which may include read and write operations, and the vertical axis in FIG. 4 represents a data operation speed.

As shown in FIG. 4, the data read speed of the CXL device may achieve 23.8 GB/s, and the data write speed thereof may achieve 12 GB/s. Currently, a data read/write speed over the Internet is approximately 3 GB/s. It can be seen that the data read/write speed of the CXL device is much higher than that over the Internet.

It should be noted that FIG. 4 only illustratively shows a minimum read/write speed that can be achieved when data is read or written via the CXL device. In an actual implementation process, depending on the type of the CXL device, the data read speed and the data write speed of the CXL device can be higher. FIG. 4 does not constitute a limitation on the data read speed and the data write speed of the CXL device.

In the data transfer method applied to the compute node in the foregoing computer cluster provided in the embodiment of the present application, the compute node in the computer cluster may store, in the CXL device, data that requires to be transferred to another compute node. And the compute node in the computer cluster may transfer a message corresponding to the data over the Internet link. The data is relatively large in size, and the message corresponding to the data is generally small in size. Therefore, in the data transfer method provided in the embodiment of the present application, the data may be rapidly transferred via the CXL device, thereby avoiding that data transfer is limited by Internet bandwidth, increasing a data transfer rate, improving data transfer efficiency in the computer cluster, and further enhancing operating efficiency of the computer cluster. For example, the computer cluster may be an AI training cluster. When the data transfer efficiency of the AI training cluster is improved, a training speed of the AI training cluster may also be improved.

The following describes the technical solutions described in the embodiments of the present application through specific embodiments. It should be noted that the following specific embodiments may exist in combination with each other. For identical or similar concepts or processes, they are not repeated in some embodiments.

FIG. 5 is a flowchart illustrating a data transfer method according to an embodiment of the present application. As shown in FIG. 5, the method may include the following steps.

S501. A first compute node stores target data in a target storage location located in a target storage node via a CXL device.

The data transfer method provided in the embodiment is applicable to the compute node in the computer cluster shown in FIG. 3. The computer cluster includes a plurality of compute nodes, a storage node, and a CXL link. The CXL link may include one or more CXL devices.

The plurality of compute nodes are connected to the storage node via the CXL device, and the plurality of compute nodes are interconnected over the Internet link.

The first compute node may be any compute node in the computer cluster.

In the embodiment, there may be one or a plurality of storage nodes. "a plurality of" refers to two or more.

In a possible implementation, there may be one storage node.

In the implementation, the storage node in the computer cluster is the target storage node. The target storage location is a storage location located in the target storage node.

In another possible implementation, there may be a plurality of storage nodes.

In the implementation, the target storage node may be one or more (two or more) storage nodes among the plurality of storage nodes.

If the target storage node is one of the plurality of storage nodes, the target storage location is a storage location located in the target storage node.

For example, it is assumed that there are three storage nodes. The three storage nodes are respectively the storage node 1, the storage node 2, and the storage node 3. Assuming that the target storage node is the storage node 2, the target storage location is a storage location located in the storage node 2.

If the target storage node include two or more storage nodes of two or more storage nodes, the target storage location may be a storage location located in one target storage node, or the target storage location may be storage locations located in the two or more target storage nodes (two or more).

For example, it is assumed that there are three storage nodes. The three storage nodes are respectively the storage node 1, the storage node 2, and the storage node 3. Assuming that the target storage nodes are the storage node 2 and the storage node 3, the target storage location may be a storage location located in the storage node 2, or the target storage location may be a storage location located in the storage node 3, or the target storage location may be a storage location located in the storage node 2 and a storage location located in the storage node 3.

In the embodiment, the first compute node may store the target data in the target storage location based on a Store instruction.

Optionally, before storing the target data in the target storage location in the target storage node, the first compute node may further determine the target storage node from the storage node, and the target storage location in the target storage node.

The first compute node stores the target data in the target storage location located in the target storage node. Therefore, the first compute node may determine the target storage node and the target storage location based on a data size of the target data. The first compute node determines the target storage node and the target storage location in the target storage node in at least the following two implementations.

In a possible implementation, the first compute node may determine the target storage node from the plurality of storage nodes and the target storage location located in the target storage node, based on the data size of the target data.

Specifically, the first compute node may determine an available storage node from all storage nodes in the computer cluster, and determine the target storage node from the available storage node. The available storage node may be a storage node having a remaining storage space greater than or equal to the data size of the target data. The storage space in the target storage location is equal to the data size of the target data.

For example, it is assumed that the computer cluster includes three storage nodes, among which only one storage node has a remaining storage space greater than or equal to the data size of the target data. In this case, the storage node may be the available storage node, and the first compute node may determine the storage node as the target storage node.

It should be noted that, if there are a plurality of available storage nodes, the first compute node may determine, based on a first preset manner, one of the plurality of available storage nodes as the target storage node.

The first preset manner may be configured based on an actual requirement, and is not limited in the embodiment. For example, the first preset manner may be to determine, from the plurality of available storage nodes, a storage node having the smallest remaining storage space as the target storage node. In this way, the remaining storage space in the target storage node can be closest in size to the target data, thereby enabling rational utilization of the available storage nodes and avoiding a waste of available storage nodes having relatively large remaining storage spaces. Alternatively, the first preset manner may be to determine, from the plurality of available storage nodes, a storage node closest to the first compute node as the target storage node, so that a storage path of the target data is shortest and a storage speed is fastest.

After determining the target storage node, the first compute node may determine, based on the manner for determining the target storage location, the target storage location from the remaining storage space in the target storage node.

It should be noted that, the manner for determining the target storage location may be configured based on an actual requirement, and is not limited in the embodiment. For example, the first compute node may determine, as the target storage location, a contiguous storage space in the remaining storage space, which starts from a lowest storage address and has a storage space size equal to the data size of the target data.

In the foregoing manner, any available storage node in the computer cluster may be regarded as the target storage node, so that utilization of the storage node in the computer cluster is relatively high.

In another possible implementation, the first compute node obtains storage configuration information corresponding to the first compute node. The storage configuration information includes node information of a storage node to be selected corresponding to the first compute node and a storage area to be selected in the storage node to be selected. The first compute node determines a target storage node from the storage node to be selected, and determines a target storage location from the storage area to be selected in the target storage node, based on the data size of the target data and the storage configuration information. The remaining storage space in the storage area to be selected in the target storage node is greater than or equal to the data size of the target data.

The storage area to be selected in the storage node to be selected may be a storage area, allocated to the first compute node, in the plurality of storage nodes. The first compute node may store data in the storage area to be selected in the storage node to be selected.

The node information of the storage node to be selected may include a node identifier of the storage node to be selected.

It should be noted that, for any storage node to be selected, the storage area to be selected in the storage node to be selected may be a storage area allocated by the computer cluster to the first compute node during an initial configuration process. Alternatively, the storage area to be selected in the storage node to be selected may be a storage area allocated by the computer cluster to the first compute node when the first compute node stores the data in the storage node for a first time.

In the implementation, the first compute node may determine, as the target storage node, a storage node to be selected having a remaining storage space to be selected greater than or equal to the data size of the target data.

It should be noted that, if there are a plurality of storage nodes to be selected having remaining storage spaces to be selected greater than or equal to the data size of the target data, the first compute node may determine, based on a second preset manner, one storage node to be selected from a plurality of storage nodes to be selected that satisfy conditions, as the target storage node.

The second preset manner may be configured based on an actual requirement, and is not limited in the embodiment. For example, the second preset manner may be, to determine, as the target storage node, a storage node having a smallest remaining storage space to be selected among the plurality of storage nodes to be selected that satisfy the conditions. Alternatively, the second preset manner may be to determine,, as the target storage node, a storage node closest to the first compute node among the plurality of storage nodes to be selected that satisfy the conditions, etc.

After determining the target storage node, the first compute node may determine, based on a manner for determining the target storage location, the target storage location from the remaining storage space to be selected in the target storage node.

It should be noted that, the manner for determining the target storage location may be set based on an actual requirement, and is not limited in the embodiment. For example, the first compute node may determine, as the target storage location, a contiguous storage space in the remaining storage space to be selected, which starts from the lowest storage address and has a storage space equal to the data size of the target data.

In the foregoing manner, a corresponding storage area may be allocated to the first compute node. The first compute node may determine the target storage node and the target storage location in the corresponding storage area, thereby avoiding that the first compute node determines the target storage node from all storage nodes, and the target storage location. In this way, the first compute node determines the target storage node and the target storage location at a relatively fast speed, thereby further improving a storage speed of the first compute node.

S502. The first compute node sends a notification message to the second compute node over the Internet link.

Correspondingly, the second compute node obtains the notification message from the first compute node over the Internet link.

The notification message is configured to notify the second compute node that the target data is stored in the target storage location located in the target storage node.

The second compute node may be any compute node in the computer cluster other than the first compute node.

It should be understood that there may be one or a plurality of second compute nodes. "a plurality of" refers to two or more.

In the embodiment, in at least the following two cases, the first compute node may store the target data in the target storage location located in the target storage node, and send the notification message to the second compute node.

In a first case, the second compute node requests to obtain the target data.

In this case, the second compute node may send a request message to the first compute node. The request message is configured to request to obtain the target data. After receiving the request message, the first compute node may, based on the request message, store the target data in the target storage location in the target storage node via the CXL device, and may notify the second compute node, via the notification message, that the target data is stored in the target storage location in the target storage node.

In this case, there may be one second compute node.

In a second case, the first compute node proactively stores the target data.

In this case, data may be shared between the first compute node and the second compute node. If the first compute node requires to update all or part of the shared data, the updated shared data (target data) may be stored in the target storage location in the target storage node, and the second compute node may be notified via the notification message that the target data is stored in the target storage location in the target storage node.

In this case, there may be one or more second compute nodes.

The notification message includes node information of the target storage node and the target storage location.

The node information of the target storage node may include a node identifier of the target storage node.

Optionally, the node information of the target storage node may further include a location of the target storage node in the computer cluster. In this way, if the target storage node is faulty, the first compute node, the second compute node, or another compute node in the computer cluster may quickly determine, based on the location of the target storage node in the computer cluster, the target storage node in the computer cluster.

The location of the target storage node in the computer cluster may be a connection location of the target storage node in the CXL link.

The target storage location may be a storage space represented by a start storage address and an end storage address. Alternatively, the target storage location may be a storage space represented by a start storage address and a data size of the target data.

In a possible implementation, content included in the notification message may be shown in Table 1-1.

**Table 1-1**

| Content in Notification Message Node information of target storage node | Description Node identifier of target storage node |
|---|---|
| Target storage location | Start storage address and end storage address, or start storage address and data size of target data |

In another possible implementation, the notification message may further include more content, and the content included in the notification message may be shown in Table 1-2.

**Table 1-2**

| Content in Notification Message | Description |
|---|---|
| Node information of target storage node | Node identifier of target storage node |
| | Location of target storage node in computer cluster |
| Target storage location | Start storage address and end storage address, or start storage address and data size of target data |
| Node identifier of source compute node | Node identifier of first compute node |
| Node identifier of target compute node | Node identifier of second compute node |
| Timestamp | Notification message send time |
| Timeout configuration | Waiting duration for reading target data corresponding to notification message |
| Message type | Notification type message or response type message |

As shown in Table 1-2, on the basis of Table 1-1, the notification message may further include one or more of a location of the target storage node in the computer cluster, a node identifier of a source compute node, a node identifier of a target compute node, a timeout configuration, a timestamp, or a message type.

The node identifier of the source compute node may be a node identifier of a notification message sender, that is, the node identifier of the source compute node may be a node identifier of the first compute node. The node identifier of the source compute node may be configured to indicate a source of a message.

The node identifier of the target compute node may be a node identifier of a notification message receiver, that is, the node identifier of the target compute node may be a node identifier of the second compute node. The node identifier of the target compute node may be configured to indicate a compute node that receives a message.

The timestamp may be a send time at which the first compute node sends a notification message.

The timeout configuration may be configured to indicate a waiting duration for reading target data corresponding to the notification message.

It should be noted that, when the second compute node reads, based on the notification message, the target data corresponding to the notification message, if the target data is not successfully read within a duration indicated by the timeout configuration, the second compute node may stop reading the target data, and return a reading failure response message to the first compute node.

For example, it is assumed that the waiting duration indicated by the timeout configuration is 10s. If the second compute node successfully reads the target data within 10s, the second compute node may return a reading success response message to the first compute node. If the second compute node does not successfully read the target data within 10s, the second compute node may return a reading failure response message to the first compute node.

The message type may be a notification type message or a response type message.

The notification type message may be configured to notify a compute node, which receives the notification message, of the storage location of the target data. The response type message may be configured to return a reading result of the target data to the compute node that sends the notification message.

It should be understood that the notification message sent by the first compute node to the second compute node may be a notification type message.

It may be understood that, the first compute node may store the target data in the target storage location in the target storage node via the CXL device. Rapid transfer of the target data is thereby achieved. And the first compute node may send the notification message to the second compute node over the Internet link, to notify the second compute node of the storage location of the target data. Therefore, the second computing device may quickly obtain the target data from the target storage location as required. Based on the foregoing method, decoupling of the target data and the notification message is achieved, and data transfer efficiency in the computer cluster is improved.

S503. The second compute node reads, based on the notification message, the target data from the target storage location located in the target storage node via the CXL device.

After receiving the notification message, the second compute node may obtain content included in the notification message by parsing. The second compute node may read the target data from the target storage location in the target storage node based on the content included in the notification message.

Optionally, the second compute node may read the target data from the target storage location in the target storage node by executing a Load instruction.

It should be noted that, if the first compute node sends the target data to the second compute node over the Internet link, a process of transferring the target data may be as follows. First, the first compute node may transfer the target data from a drive of the first compute node to a memory of the first compute node. Second, the first compute node may transfer the target data from the memory of the first compute node to a network interface card of the first compute node.

Correspondingly, the second compute node may read the target data from the network interface card of the first compute node via a network interface card of the second compute node. Second, the second compute node may transfer the target data from the network interface card of the second compute node to a memory of the second compute node, and may read and transfer the target data from the memory of the second compute node to a drive of the second compute node.

It can be seen that, during a process in which the target data is transferred from the first compute node to the second compute node, a plurality of transfers are required, and a read/write operation on the target data is required for each transfer. Therefore, when the data (target data) is transferred over the Internet link, on one hand, the data requires to be read and written a plurality of times, resulting in a low transfer rate; on the other hand, the data read/write speed is limited by Internet bandwidth. If the bandwidth is limited, the data transfer efficiency is reduced.

In the data transfer method provided in the embodiment, the first compute node may store local target data of the first compute node to the target storage location located in the target storage node via the CXL device based on a Store instruction. The second compute node may read the target data directly from the target storage location located in the target storage node via the CXL device by executing a Load instruction. On one hand, the data read/write operation does not need to be performed during a process in which the data (target data) is transferred from the first compute node to the second compute node, thereby improving data transfer efficiency and reducing a data read/write cost. On the other hand, the CXL device has a fast data read/write speed which is not limited by the Internet bandwidth, thereby further improving the data transfer efficiency.

It may be understood that the second compute node may complete a corresponding cluster task based on the target data that is read.

It may be understood that, the second compute node may receive the notification message sent by the first compute node over the Internet link. Based on the notification message, the second compute node may quickly read the target data from the target storage location in the target storage node via the CXL device. Based on the foregoing method, decoupling of the target data and the notification message is achieved, and data transfer efficiency in the computer cluster is improved.

S504. The second compute node sends a response message to the first compute node over the Internet link. The response message includes a reading result of the target data, and the reading result is a reading success or a reading failure.

Correspondingly, the first compute node may receive the response message sent by the second compute node over the Internet link.

In the embodiment, the second compute node may read the target data based on the notification message, and may feed back a reading result to the first compute node based on the response message.

Optionally, if the reading result is reading failure, the response message may further include a cause of the reading failure.

It should be understood that the message type of the response message may be a response type message.

In the data transfer method provided in the embodiment, the first compute node may store the target data in the target storage location in the target storage node via the CXL device, and send the notification message to the second compute node over the Internet link. The second compute node may read, based on the notification message, the target data from the target storage location in the target storage node via the CXL device, and send the response message to the first compute node over the Internet link. In the foregoing method, the first compute node may quickly transfer the target data to the second compute node via the CXL device, and may send the notification message over the Internet link to notify the second compute node of reading the target data, which achieves decoupling of the data (the target data) and the message (the notification message or the response message), thereby improving data transfer efficiency in the computer cluster.

It may be understood that, in other embodiments, the data transfer method may further include only S501 and S502 in FIG. 5. Alternatively, the data transfer method may further include only S503 and S504 in FIG. 5.

The following describes variousimplementations of the CXL link, and describes data transfer methods corresponding to the various different implementations based on the various different implementations of the CXL link.

For example, the CXL link may include at least one CXL device. The CXL device may be a multi-host CXL device, or the CXL device may be a CXL switch device.

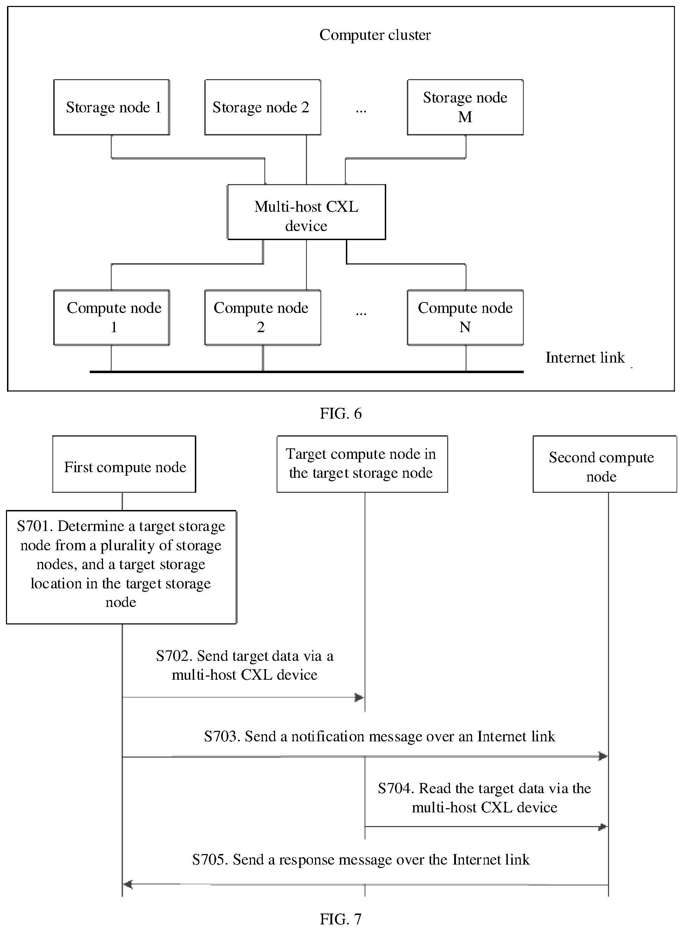

The following describes, in combination with FIG. 6 to FIG. 11, a data transfer method in a computer cluster when the CXL device is a multi-host CXL device or the CXL device is a CXL switch device.

The following describes a case in which the CXL device is a multi-host CXL device in combination with FIG. 6 to FIG. 8.

First, in combination with FIG. 6, a structure of the computer cluster when the CXL device is a multi-host CXL device is described.

FIG. 6 is a structural diagram illustrating a computer cluster according to an embodiment of the present application. As shown in FIG. 6, the computer cluster may include a plurality of storage nodes, a plurality of compute nodes, a multi-host CXL device, and an Internet link. The plurality of storage nodes may be the storage node 1, the storage node 2, ..., and the storage node M. The plurality of compute nodes may be the compute node 1, the compute node 2, ..., and the compute node N. M and N may be the same, or M and N may be different, which are not limited in the embodiment of the present application. Of course, in other embodiments, there may be one storage node and two or more compute nodes.

There may be one or more multi-host CXL devices. The plurality of compute nodes are connected to the plurality of storage nodes via the one or more multi-host CXL devices.

When there are a plurality of multi-host CXL devices, the multi-host CXL devices may be directly or indirectly connected. For example, for any two multi-host CXL devices, the two multi-host CXL devices may be directly connected via a connection interface on the CXL device. Alternatively, the two multi-host CXL devices may be respectively connected to the same compute node, so as to achieve an indirect connection between the two multi-host CXL devices.

When there is one multi-host CXL device, as shown in FIG. 6, FIG. 6 uses the one multi-host CXL device as an example for illustration. Each storage node may be connected to the multi-host CXL device, and each compute node may be connected to the multi-host CXL device. That is, the plurality of storage nodes and the plurality of compute nodes may be connected via the multi-host CXL device.

For any compute node, the compute node may communicate with one or more other compute nodes in the computer cluster via the multi-host CXL device. Alternatively, the compute node may communicate with the storage node in the computer cluster via the multi-host CXL device.

The plurality of compute nodes may be connected over the Internet link. It should be noted that, based on the embodiment in FIG. 3, the embodiment in FIG. 6 further describes a case in which the CXL device is the multi-host CXL device. For other descriptions about the compute nodes, the storage nodes, and the CXL link in FIG. 6, reference may be made to FIG. 3, and details are not described herein.

Second, in combination with FIG. 7, a data transfer method in the computer cluster when the CXL device is a multi-host CXL device is described.

FIG. 7 is a flowchart illustrating another data transfer method according to an embodiment of the present application. As shown in FIG. 7, the method may include the following steps.

S701. The first compute node may determine a target storage node from a plurality of storage nodes, and determine a target storage location in the target storage node.

In the embodiment, the first compute node may be any compute node in FIG. 6, that is, the first compute node may be any one of the compute node 1, the compute node 2..., or the compute node N.

It should be noted that, for the implementation of S701, reference may be made to S501, and details will not be repeated herein.

S702. The first compute node stores target data in the target storage location located in the target storage node via the multi-host CXL device.

In the embodiment, the first compute node sends a first storage request to the multi-host CXL device, and the first storage request includes node information of the target storage node, the target storage location, and the target data. The first storage request is configured to request the multi-host CXL device to store the target data in the target storage location located in the target storage node.

Specifically, the first compute node may request the multi-host CXL device to store the target data in the target storage location located in the target storage node.

It should be noted that, because a data read/write speed of the multi-host CXL device is significantly higher than that over the Internet link, and the target data is generally large in size, the embodiment avoids storing the target data over the Internet link, thereby preventing the Internet bandwidth from affecting transfer efficiency of the target data.

S703. The first compute node sends a notification message to the second compute node over the Internet link.

Due to the small size of the notification message, low Internet bandwidth is required for transfer of the notification message over the Internet link. Currently, the Internet bandwidth may satisfy a transfer speed requirement of the notification message. Therefore, in the embodiment, the notification message may be sent over the Internet link.

In the embodiment, the network interface card of the first compute node may be communicatively connected to the network interface card of the second compute node over the Internet link. When the first compute node sends the notification message to the second compute node, the network interface card of the first compute node may send the notification message to the network interface card of the second compute node over the Internet link, so that the second compute node may obtain the notification message.

In the embodiment, the second compute node may be any one or more compute nodes other than the first compute node in FIG. 6.

For example, FIG. 6 is used as an example. It is assumed that the first compute node is the compute node 1. The second compute node may be any one or more of the compute node 2, the compute node 3..., or the compute node N.

For information related to the notification message, reference may be made to S502, and details are not described herein.

S704. The second compute node reads, based on the notification message, the target data from the target storage location located in the target storage node via the multi-host CXL device.

In the embodiment, the second compute node may parse content of the notification message to obtain the target storage node and the target storage location of the target data, and may read the target data from the target storage location in the target storage node via the multi-host CXL device.

Optionally, the second compute node may send a read request to the multi-host CXL device. The read request may include the target storage node and the target storage location. The multi-host CXL device may obtain the target data from the target storage location located in the target storage node based on the read request. After the multi-host CXL device obtains the target data, the second compute node may read the target data from the multi-host CXL device, and may process a corresponding cluster task in the computer cluster based on the target data.

S705. The second compute node sends a response message to the second compute node over the Internet link. The response message includes a reading result of the target data, and the reading result is a reading success or a reading failure.

The response message is small in size. Low bandwidth is required during transfer of a corresponding message over the Internet link. Therefore, in the embodiment, the response message may also be sent over the Internet link.

In the data transfer method provided in the embodiment, the first compute node may store the target data in the target storage location located in the target storage node via the CXL device, and send the notification message to the second compute node over the Internet link. The second compute node may read, based on the notification message, the target data from the target storage location located in the target storage node via the CXL device, and send the response message to the second compute node over the Internet link. In the foregoing method, the data may be transferred between the first compute node and the second compute node via the CXL device, and the message (for example, the notification message or the response message) may be transferred over the Internet link. Based on the foregoing method, decoupling of the data (target data) and the message may be achieved. In addition, the data read/write speed of the CXL device is relatively high, and data reading and writing via the CXL device is not limited by Internet bandwidth. Therefore, the data transfer method provided in the embodiment of the present application may improve data transfer efficiency in the computer cluster.

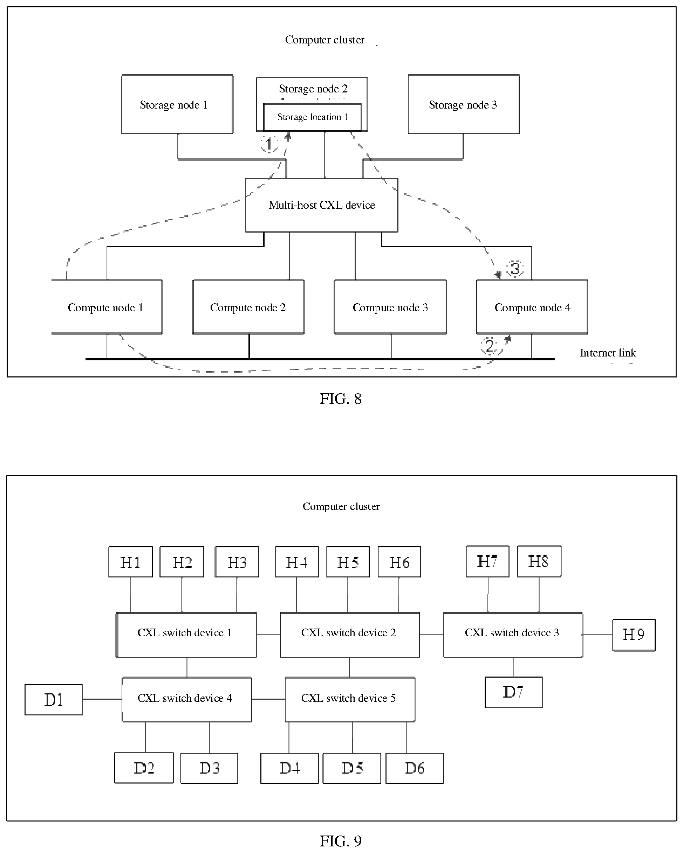

Finally, in combination with FIG. 8, a data transfer process in a computer cluster when the CXL device is a multi-host CXL device is described.

FIG. 8 is a schematic diagram illustrating a data transfer process according to an embodiment of the present application. As shown in FIG. 8, the computer cluster may include the storage node 1, the storage node 2, the storage node 3, the multi-host CXL device, the compute node 1, the compute node 2, the compute node 3, the compute node 4, and the Internet link.

The storage node 1, the storage node 2, the storage node 3, the compute node 1, the compute node 2, the compute node 3, and the compute node 4 may all be connected to the multi-host CXL device. The compute node 1, the compute node 2, the compute node 3, and the compute node 4 may further be connected to the Internet link.

It is assumed that the first compute node is the compute node 1, the second compute node is the compute node 4, a target storage node is the storage node 2, and a target storage location is a storage location 1. A process of transferring target data may be as follows.

First, the compute node 1 may store the target data in the storage location 1 of the storage node 2 via the multi-host CXL device. Second, the compute node 1 may send, to the compute node 4, a notification message corresponding to the target data over the Internet link. Finally, the compute node 4 may parse the notification message to obtain the target storage node and the target storage location, and may read the target data from the storage location 1 of the storage node 2 via the multi-host CXL device.

Optionally, in other embodiments, there may be a plurality of second compute nodes. If there are the plurality of second compute nodes, the first compute node may broadcast the notification message to the plurality of second compute nodes over the Internet link, so that each second compute node may obtain the target data via the multi-host CXL device based on the notification message.

The following description is provided in combination with FIG. 9 to FIG. 11 to describe a case in which the CXL link includes at least one CXL device and the CXL device is a CXL switch device.

First, in combination with FIG. 9, a structure of a computer cluster when the CXL device is the CXL switch device is described.

FIG. 9 is a structural diagram illustrating another computer cluster according to an embodiment of the present application. As shown in FIG. 9, the computer cluster may include a plurality of compute nodes, a plurality of CXL switch devices, and a plurality of storage nodes. For example, the plurality of compute nodes may include H1, H2, H3, H4, H5, H6, H7, H8, and H9. The plurality of storage nodes may include D1, D2, D3, D4, D5, D6, and D7. The plurality of CXL switch devices may include a CXL switch device 1, a CXL switch device 2, a CXL switch device 3, a CXL switch device 4, and a CXL switch device 5.

There may be one or more CXL switch devices. When there are the plurality of CXL switch devices, all the CXL switch devices in the computer cluster may be interconnected. The interconnection may be a direct connection or an indirect connection. For example, the CXL switch device 1 may be directly connected to the CXL switch device 4, and the CXL switch device 1 may also be indirectly connected to the CXL switch device 5 via the CXL switch device 4.

Each compute node may be connected to one CXL switch device. For example, H1 may be connected to the CXL switch device 1.

Each storage node may be connected to one CXL switch device. For example, D1 may be connected to the CXL switch device 4.

Each CXL switch device may be connected to at least one compute node and/or at least one storage node.

In addition, all the compute nodes may further be connected via an Internet link (not shown in FIG. 9). The Internet link may be a wired link, or the Internet link may be a wireless link.

It should be noted that, FIG. 9 only illustrates the structure of the computer cluster as an example, and does not constitute a limitation on the structure of the computer cluster. Locations of each compute node and each storage node in the computer cluster may be configured based on an actual requirement. There may be one or more storage devices and one or more CXL switch devices in the computer cluster, and one or more compute nodes/storage nodes connected to each CXL switch device, and each compute node may also be connected to the one or more CXL switch devices, which are not limited in the embodiment.

For any compute node, the compute node may communicate with one or more other compute nodes in the computer cluster via the multi-host CXL device. Alternatively, the compute node may communicate with the storage node in the computer cluster via the multi-host CXL device.

It should be noted that, based on the embodiment in FIG. 3, the embodiment in FIG. 9 further describes a case in which the CXL device is the CXL switch device. For other descriptions about the compute nodes, the storage nodes, and the CXL link in FIG. 9, reference may be made to FIG. 3, and details are not described herein.

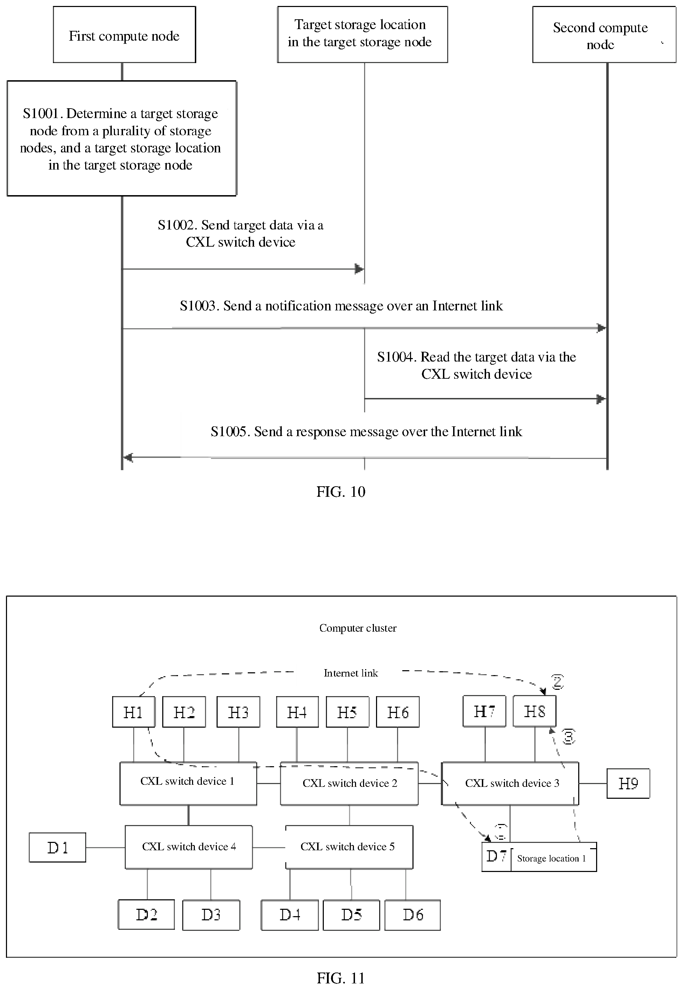

Second, in combination with FIG. 10, a data transfer method in a computer cluster when the CXL device is the CXL switch device is described.

FIG. 10 is a flowchart illustrating another data transfer method according to an embodiment of the present application. As shown in FIG. 10, the method may include the following steps.

S1001. The first compute node determines a target storage node from a plurality of storage nodes, and determines a target storage location in the target storage node.

In the embodiment, the first compute node may be any compute node in FIG. 9, that is, the first compute node may be any one of H1, H2, H3, H4, H5, H6, H7, H8 or H9.

It should be noted that, for the implementation of S1001, reference may be made to S501, and details will not be repeated herein.

S1002. The first compute node stores target data in the target storage location in the target storage node via the CXL switch device.

In the embodiment, the first compute node may send a second storage request to the CXL switch device. The second storage request includes node information of the target storage node, the target storage location, and the target data. The second storage request is configured to instruct the CXL switch device to store the target data in the target storage location located in the target storage node.

Optionally, the first compute node may send the second storage request to a first CXL switch device directly connected to the first compute node.

In the embodiment, the target storage node may be directly connected to the first CXL switch device. Alternatively, the target storage node may not be directly connected to the first CXL switch device.

In a possible implementation, if the target storage node is directly connected to the first CXL switch device, the first CXL switch device may store the target data in the target storage location located in the target storage node based on the second storage request.

In another possible implementation, if the target storage node is not directly connected to the first CXL switch device, but the CXL switch device directly connected to the target storage node is directly connected to the first CXL switch device. In the implementation, the first CXL switch device may directly forward the second storage request to the CXL switch device directly connected to the target storage node, so that the CXL switch device directly connected to the target storage node stores the target data in the target storage location located in the target storage node.

In another possible implementation, if the target storage node is not directly connected to the first CXL switch device, and the CXL switch device directly connected to the target storage node is not directly connected to the first CXL switch device. In the implementation, the first CXL switch device may forward the second storage request to the CXL switch device directly connected to the target storage node via at least one other CXL switch device, so that the CXL switch device directly connected to the target storage node stores the target data in the target storage location located in the target storage node.

It should be noted that, because a data read/write speed of the CXL switch device is significantly higher than that over the Internet link, and the target data is generally large in size, the embodiment avoids storing the target data over the Internet link, thereby preventing the Internet bandwidth from affecting transfer efficiency of the target data.

S1003. The first compute node sends a notification message to the second compute node over the Internet link.

The second compute node may be any compute node in the computer cluster other than the first compute node.

For example, FIG. 9 is taken as an example. The second compute node may be any one or more compute nodes other than the first compute node in FIG. 9. It is assumed that the first compute node is H1. The second compute node may be any one or more compute nodes among H1, H2, H3, H4, H5, H6, H7, H8, and H9.

For information related to the notification message, reference may be made to S502, and details are not described herein.

Since the notification message is small in size, low Internet bandwidth is required for transfer of the notification message over the Internet link. Currently, the Internet bandwidth may satisfy a transfer speed requirement of the notification message. Therefore, in the embodiment, the notification message may be sent over the Internet link.

In the embodiment, the network interface card of the first compute node may be communicatively connected to the network interface card of the second compute node over the Internet link. When the first compute node sends the notification message to the second compute node, the network interface card of the first compute node may send the notification message to the network interface card of the second compute node over the Internet link, so that the second compute node may obtain the notification message.

S1004. The second compute node reads, based on the notification message, the target data from the target storage location in the target storage node via the CXL device.

In the embodiment, the second compute node may parse content of the notification message to obtain the target storage node and the target storage location of the target data, and may read the target data from the target storage location in the target storage node via the CXL switch device.

Optionally, the second compute node may send a read request to a CXL switch device directly connected to the second compute node. The read request may include the target storage node and the target storage location. The CXL switch device directly connected to the second compute node may directly or indirectly obtain the target data from the target storage location in the target storage node based on the read request. After the CXL switch device directly connected to the second compute node obtains the target data, the second compute node may read the target data from the CXL switch device directly connected to the second compute node, and may process a corresponding cluster task in the computer cluster based on the target data.

S1005. The second compute node sends a response message to the second compute node over the Internet link. The response message includes a reading result of the target data, and the reading result is a reading success or a reading failure.

In the embodiment, the response message may also be sent over the Internet link.

In the data transfer method provided in the embodiment, the first compute node may store the target data to a corresponding target storage location via the CXL switch device, and send the notification message to the second compute node over the Internet link. The second compute node may read, based on the notification message, the target data from the target storage location in the target storage node via the CXL switch device, and send the response message to the second compute node over the Internet link. In the foregoing method, the data may be transferred between the first compute node and the second compute node via the CXL switch device, and the message (for example, the notification message or the response message) may be transferred over the Internet link. It may be understood that the data requires a large amount of bandwidth, and if the bandwidth is limited, data transfer efficiency may be affected. Based on the foregoing method, decoupling of the data and the message may be achieved. A data read/write speed via the CXL switch device is relatively high, and data reading and writing via the CXL switch device is not limited by the Internet bandwidth, which avoids low data transfer efficiency via the Internet, and may improve data transfer efficiency in the computer cluster.

Finally, in combination with FIG. 11, a data transfer process in the computer cluster when the CXL device is the CXL switch device is described through a specific example.

FIG. 11 is a schematic diagram illustrating another data transfer process according to an embodiment of the present application. As shown in FIG. 11, based on FIG. 9, it is assumed that the first compute node is H1, the second compute node is H8, the target storage node is D7, and the target storage location is a storage location 1 in D7. In this case, the first CXL switch device is the CXL switch device 1.

A process of transferring target data may be as follows.

First, H1 may send a second storage request to the CXL switch device 1. The CXL switch device 1 may forward the second storage request to the CXL switch device 3 via the CXL switch device 2, so that the CXL switch device 3 may store the target data in a storage location 1 in D2 based on the second storage request. Second, H1 may send, to H8, a notification message corresponding to the target data over the Internet link. Finally, H8 may parse the notification message to obtain a target storage node and a target storage location, and may read the target data from the storage location 1 in D7 via the CXL switch device 3.

Optionally, in other embodiments, there may further be a plurality of second compute nodes. If there are the plurality of second compute nodes, the first compute node may broadcast the notification message to the plurality of second compute nodes over the Internet link, so that each second compute node may obtain the target data via the CXL switch device based on the notification message.

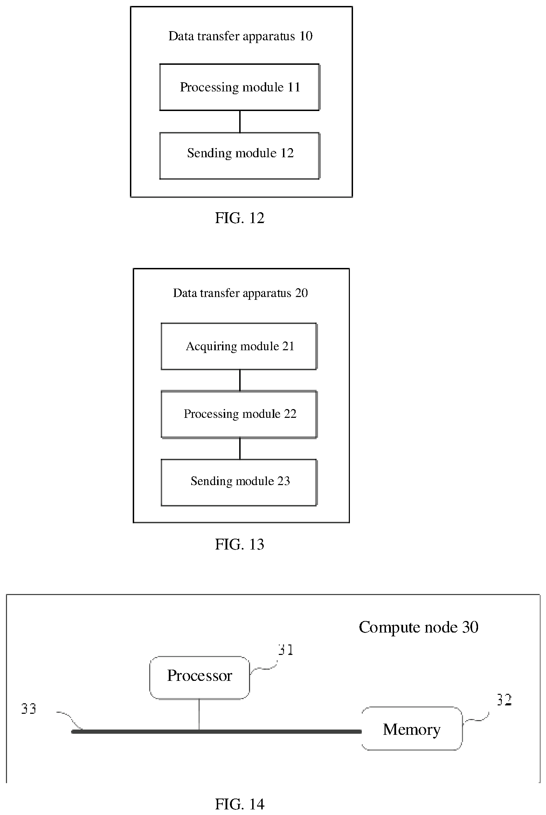

FIG. 12 is a structural diagram illustrating a data transfer apparatus according to an embodiment of the present application. A data transfer apparatus 10 is applied to a compute node in a computer cluster, and the computer cluster is, for example, the computer cluster shown in FIG. 3/FIG. 6/FIG. 9. The computer cluster includes the plurality of compute nodes, the storage node, and the CXL device. The plurality of compute nodes are connected to the storage node via the CXL device, and the plurality of compute nodes are further interconnected over the Internet link. Any compute node among the plurality of compute nodes may include the data transfer apparatus 10. The data transfer apparatus 10 may include a processing module 11 and a sending module 12.

The processing module 11 is configured to store target data in a target storage location located in a target storage node via the CXL device.

The sending module 12 is configured to send a notification message to the second compute node over the Internet link. The notification message includes node information of the target storage node and the target storage location. The notification message is configured to notify the second compute node that the target data is stored in the target storage location located in the target storage node. The second compute node is any compute node among the plurality of compute nodes other than a compute node to which the data transfer apparatus belongs.

The data transfer apparatus provided in the embodiment may be configured to perform the data transfer method performed by the first compute node in the forgoing method embodiments. The implementation principles and technical effects thereof are similar, and details are not repeated herein.

In a possible implementation, the CXL device is a multi-host CXL device, and the plurality of compute nodes and the storage node are respectively connected to the multi-host CXL device. The processing module 11 is specifically configured to,
send a first storage request to the multi-host CXL device. The first storage request includes the node information of the target storage node, the target storage location, and the target data.

The first storage request is configured to request the multi-host CXL device to store the target data in the target storage location located in the target storage node.

In a possible implementation, the CXL device is a CXL switch device, and the plurality of compute nodes are connected to the storage node via the CXL switch device. The processing module 11 is specifically configured to,

send a second storage request to the CXL switch device. The second storage request includes the node information of the target storage node, the target storage location, and the target data.

The second storage request is configured to instruct the CXL switch device to store the target data in the target storage location located in the target storage node.

In a possible implementation, the processing module 11 is further configured to, determine the target storage node and the target storage location in the target storage node.

In a possible implementation, the processing module 11 is specifically configured to,
obtain storage configuration information corresponding to the first compute node, in which the storage configuration information includes node information of a storage node to be selected corresponding to the first compute node, and a storage area to be selected in the storage node to be selected; and
determine the target storage node from the storage node to be selected, and determine the target storage location from the storage area to be selected in the target storage node, based on a data size of the target data and the storage configuration information, in which a remaining storage space in the storage area to be selected in the target storage node is greater than or equal to the data size of the target data.

The data transfer apparatus provided in the embodiment may be configured to perform the data transfer method performed by the first compute node in the forgoing method embodiments. The implementation principles and technical effects thereof are similar, and details are not repeated herein.

FIG. 13 is a structural diagram illustrating another data transfer apparatus according to an embodiment of the present application. A data transfer apparatus 20 is applied to a computer cluster. The computer cluster includes a plurality of compute nodes, a storage node, and a compute express link (CXL) device. The plurality of compute nodes are connected to the storage node via the CXL device, and the plurality of compute nodes are further interconnected over an Internet link. Any compute node among the plurality of compute nodes may include the data transfer apparatus 20. The data transfer apparatus 20 may include an obtaining module 21, a processing module 22, and a sending module 23.

The obtaining module 21 is configured to, obtain a notification message from a first compute node over the Internet link. The notification message includes node information of a target storage node and a target storage location. The plurality of compute nodes include the first compute node. The storage node includes the target storage node.

The processing module 22 is configured to, read, based on the notification message, target data from the target storage location located in the target storage node via the CXL device.

The sending module 23 is configured to, send a response message to the first compute node over the Internet link. The response message includes a reading result of the target data, and the reading result is a reading success or a reading failure.

The data transfer apparatus provided in the embodiment may be configured to perform the data transfer method performed by the second compute node in the above method embodiments. The implementation principles and technical effects thereof are similar, and details are not repeated herein.

In a possible implementation,
the CXL device is a multi-host CXL device, and the plurality of compute nodes and the storage node are respectively connected to the multi-host CXL device; or
the CXL device is a CXL switch device, and the CXL switch device is connected to one or more compute nodes and/or at least one storage node.

The data transfer apparatus provided in the embodiment may be configured to perform the data transfer method performed by the second compute node in the above method embodiments. The implementation principles and technical effects thereof are similar, and details are not repeated herein.

An embodiment of the present application provides a computer cluster. The computer cluster includes a plurality of compute nodes, a storage node, and a CXL device. The compute node is configured to perform the data transfer method as described in the above any embodiment.

Optionally, the CXL device is a multi-host CXL device, and the plurality of compute nodes and the storage node are respectively connected to the multi-host CXL device; or
the CXL device is a CXL switch device, and the plurality of compute nodes are connected to the storage node via the CXL switch device.

The computing device in the computer cluster provided in the embodiment may be configured to perform the data transfer method in the forgoing method embodiments. The implementation principles and technical effects thereof are similar, and details are not repeated herein.

FIG. 14 is a structural diagram illustrating a compute node according to an embodiment of the present application. The compute node may be the first compute node. The compute node may also be the second compute node. As shown in FIG. 14, a compute node 30 may include a processor 31 and a memory 32. The processor 31 and the memory 32 may communicate with each other. For example, the processor 31 and the memory 32 communicate with each other via a communication bus 33. The memory 32 is configured to store a computer executable program, and the processor 31 is configured to call the computer executable program stored in the memory to perform the data transfer method shown in any of the above method embodiments.

Optionally, the processing module 11 and the sending module 12 in FIG. 12, and the obtaining module 21, the processing module 22, and the sending module 23 in FIG. 13 may be achieved by the processor 31.

Optionally, the compute node 30 may further include a communication interface, and the communication interface may include a sender and/or a receiver.

Optionally, information sent by the sending module 12 in FIG. 12 and the sending module 23 in FIG. 13 may be sent to an external network via a sender. Information to be received by the obtaining module 21 in FIG. 13 may be first received from the external network via a receiver, and then transferred to the obtaining module 21.

Optionally, the compute node 30 may further include a network interface card. The processor is communicatively connected to the network interface card. The processor is communicatively connected to an Internet link via the network interface card.

Optionally, the processor may be a Central Processing Unit (Central Processing Unit, CPU), a Graphics Processing Unit (Graphics Processing Unit, GPU), another general-purpose processor, a Digital Signal Processor (Digital Signal Processor, DSP), an Application Specific Integrated Circuit (Application Specific Integrated Circuit, ASIC), or the like. The general-purpose processor may be a microprocessor, any conventional processor, or the like. Steps of the methods disclosed in the embodiments of the present application may be directly embodied as being implemented by a hardware processor, or by a combination of hardware and software modules in the processor.

An embodiment of the present application provides a computer-readable storage medium. The computer-readable storage medium stores a computer executable instruction. The computer executable instruction is configured to implement the data transfer method as described in the above any embodiment.

An embodiment of the present application provides a computer program product. The computer program product includes a computer program. When the computer program is executed, the computer is enabled to perform the data transfer method.

All or part of the steps of each method embodiment described above may be completed by hardware related to a program instruction. The above program may be stored in a readable memory. When the program is executed, the steps of the above each method embodiment are performed; and the above memory (storage medium) includes a read-only memory (read-only memory, ROM), a RAM, a flash memory, a hard drive, a solid-state drive, a magnetic tape, a floppy disk, an optical disc, or any combination thereof.

The embodiment of the present application is described with reference to a method, a device (system), and flowcharts and/or block diagrams of a computer program product according to the embodiment of the present application. It should be understood that each process and/or block in the flowcharts and/or block diagrams, and a combination of processes and/or blocks in the flowcharts and/or block diagrams, can be implemented by computer program instructions. These computer program instructions may be provided to a processing unit of a general-purpose computer, a special-purpose computer, an embedded processor or any other programmable terminal device to produce a machine, such that the instructions executed via the processing unit of the computer or other programmable terminal device create an apparatus for implementing functions specified in one or more processes of the flowcharts and/or one or more blocks of the block diagrams.

These computer program instructions may also be stored in a computer-readable memory that can direct a computer or other programmable terminal devices to operate in a particular manner, such that the instructions stored in the computer-readable memory produce a manufactured article including an instruction apparatus, and the instruction apparatus implements the functions specified in one or more processes of the flowcharts and/or one or more blocks of the block diagrams.

These computer program instructions may also be loaded onto the computer or other programmable terminal devices to cause a series of operational steps to be performed on the computer or other programmable terminal devices to produce a computer-implemented process, thereby providing steps for implementing the functions specified in one or more processes of the flowcharts and/or one or more blocks of the block diagrams.

It is apparent that those skilled in the art may make various modifications and variations of the embodiments of the present application without departing from the spirit and scope of the embodiments of the present application. Therefore, if these modifications and variations of the embodiments of the present application fall within the scope of claims and equivalents thereof, the embodiments of the present application are intended to cover these modifications and variations.

In the embodiments of the present application, the terms "comprising", "including" or any other variations thereof are intended to cover non-exclusive inclusions, such that a process, method, article, or apparatus that includes a series of elements not only includes those elements, but also includes other elements that are not expressly listed, or further includes elements inherent to the process, method, article, or apparatus. In the absence of additional limitations, elements limited by the sentence "comprising a..." do not exclude the presence of additional identical elements in the process, method, article, or apparatus that includes the elements. The term "or" and variants thereof may refer to "and/or". In the embodiments of the present application, terms such as "first" and "second" are intended to distinguish between similar objects, but do not necessarily indicate a specific order or sequence. In the embodiments of the present application, "a plurality" refers to two or more. "and/or" refers to an association relationship between association objects, indicating that three relationships may exist. For example, A and/or B may represent: A exists independently, A and B exist simultaneously, and B exists independently. The character "/" generally indicates that the association objects are in an "or" relationship.

After considering the invention disclosed in the specification and practice, those skilled in the art may easily think of other implementations of the present application. The embodiments of the present application are intended to cover any variations, uses, or adaptive changes of the embodiments of the present application, as long as these variations, uses, or adaptive changes follow general principles of the embodiments of the present application and include common knowledge or conventional technical means in the technical field that are not disclosed herein.

## Claims

1. A data transfer method, applied to a first compute node in a computer cluster, wherein the computer cluster comprises a plurality of compute nodes, a storage node, and a compute express link (CXL) device; the plurality of compute nodes are connected to the storage node via the CXL device, and the plurality of compute nodes are further interconnected over an Internet link; and the method comprises:
storing, by the first compute node, target data in a target storage location located in a target storage node via the CXL device, wherein the first compute node is any compute node among the plurality of compute nodes, and the storage node comprises the target storage node; and
sending, by the first compute node, a notification message to a second compute node over the Internet link, wherein the notification message comprises node information of the target storage node and the target storage location, and the notification message is configured to notify the second compute node that the target data is stored in the target storage location located in the target storage node, wherein the second compute node is any compute node among the plurality of compute nodes other than the first compute node.

2. The method according to claim 1, wherein the CXL device is a multi-host CXL device, and the plurality of compute nodes and the storage node are respectively connected to the multi-host CXL device; and
storing, by the first compute node, the target data in the target storage location located in the target storage node via the CXL device, comprises:
sending, by the first compute node, a first storage request to the multi-host CXL device, wherein the first storage request comprises the node information of the target storage node, the target storage location, and the target data;
wherein the first storage request is configured to request the multi-host CXL device to store the target data in the target storage location located in the target storage node.

3. The method according to claim 1, wherein the CXL device is a CXL switch device, and the plurality of compute nodes are connected to the storage node via the CXL switch device; and
storing, by the first compute node, the target data in the target storage location located in the target storage node via the CXL device, comprises:
sending, by the first compute node, a second storage request to the CXL switch device, wherein the second storage request comprises the node information of the target storage node, the target storage location, and the target data;
wherein the second storage request is configured to instruct the CXL switch device to store the target data in the target storage location located in the target storage node.

4. The method according to any one of claims 1 to 3, further comprising: determining, by the first compute node, the target storage node and the target storage location located in the target storage node.

5. The method according to claim 4, wherein determining, by the first compute node, the target storage node and the target storage location located in the target storage node, comprises:
obtaining, by the first compute node, storage configuration information corresponding to the first compute node, wherein the storage configuration information comprises node information of a storage node to be selected corresponding to the first compute node, and a storage area to be selected in the storage node to be selected; and
determining, by the first compute node, the target storage node from the storage node to be selected, and determining the target storage location from the storage area to be selected in the target storage node, based on a data size of the target data and the storage configuration information, wherein a remaining storage space in the storage area to be selected in the target storage node is greater than the data size of the target data.

6. A data transfer method, applied to a second compute node in a computer cluster, wherein the computer cluster comprises a plurality of compute nodes, a storage node, and a compute express link (CXL) device, the plurality of compute nodes are connected to the storage node via the CXL device, and the plurality of compute nodes are further interconnected over an Internet link; and the method comprises:
obtaining, by the second compute node, a notification message from a first compute node over the Internet link, wherein the notification message comprises node information of a target storage node and a target storage location, the plurality of compute nodes comprise the second compute node and the first compute node, and the storage node comprises the target storage node; and
reading, by the second compute node, based on the notification message, target data from the target storage location located in the target storage node via the CXL device.

7. The method according to claim 6, further comprising:
sending, by the second compute node, a response message to the first compute node over the Internet link, wherein the response message comprises a reading result of the target data, and the reading result is a reading success or a reading failure.

8. The method according to claim 6 or 7, wherein
the CXL device is a multi-host CXL device, and the plurality of compute nodes and the storage node are respectively connected to the multi-host CXL device; or
the CXL device is a CXL switch device, and the plurality of compute nodes are connected to the storage node via the CXL switch device.

9. A computing device, comprising: a processor, and a memory communicatively connected to the processor;
wherein the memory stores a computer executable program; and
the processor executes the computer executable program stored in the memory, to implement the method according to any one of claims 1 to 8.

10. The compute node according to claim 9, further comprising a network interface card, wherein the processor is communicatively connected to the network interface card; and
the processor is communicatively connected to an Internet link via the network interface card.
